# EUROPEAN PATENT APPLICATION

(11) **EP 4 752 006 A1**
(43) Date of publication of application: **03.06.2026**
(21) Application number: 25216851.3
(22) Date of filing: 19.11.2025
(51) Int. Cl.: B60R 21/00

(54) **JOINING ELEMENT FOR IMPACT CONTROL**

(30) Priority: 27.11.2024 ES 202430981
(71) Applicant: Seat, S.A., 08760 Martorell - Barcelona (ES)
(72) Inventor: Calleja Garcia, Benjamin, Martorell (ES); Fernandez Gomez, Antonio, Martorell (ES); Gonzalez Crespo, Maria, Martorell (ES)
(74) Representative: Pons IP

(57) **Abstract**

A joining element between two vehicle parts, comprising a first joining area (1), wherein a first part is fixed, and a second joining area (2) is arranged at an opposite end of the joining element in relation to the first joining area (1), wherein a second part is fixed, which also comprises a fuse area (4) intended to break in a controlled way upon application of a compressive force greater than a default value, and a deformable area (3) arranged between the first joining area (1) and the second joining area (2), designed to undergo deformation when the fuse area (4) breaks, controlling the relative movement between the first joining area (1) and the second joining area (2), the joining element being made up of a single component.

## Description

### OBJECT OF THE INVENTION

This invention refers to a joining element, formed as a single part, i.e., single-piece, which provides fastening between two parts of a vehicle and control over deformation in the event of an impact, so that both parts remain solidly connected.

### BACKGROUND OF THE INVENTION

No single-piece joining element is known in the prior art that is intended to join two parts while simultaneously providing the functions of controlling the deformation of the part in an impact and at the same time maintaining a solid connection between the parts.

On the contrary, there are known joining parts between two elements that break upon receiving an impact, causing the connected parts to separate, which may be problematic if one of them becomes loose. Similarly, it is impossible to control the deformation of the system, as the parts may move relative to each other in any direction or distance.

On the other hand, there are also known joining parts between two elements that, without being collapsible, do not allow the joining element to move to absorb the energy received in an impact. This poses a problem, as the energy is transmitted and uncontrolled, without knowing what element will absorb it.

EP1916178A1 refers to a vehicle bumper fastening and energy absorption device comprising a sheet structure attached at one end to the vehicle internal structure and at the other end to the bumper, rotating upon impact toward the engine compartment through a deformation that absorbs the received energy. Although the device includes a sheet shape with cuts and bends to provide the desired structure, it only absorbs energy plastically, without breaking any part.

US4949992 refers to a vehicle steering column assembly that absorbs energy. It includes two telescopically coupled upper and lower column tubes. The upper column tube is mounted on a steering column support member at its rear end via a separable coupling member or support fixed to the upper column tube, which has shear modules forming a portion of the support, allowing separation from the steering column support member after a driver impact. The remainder of the steering column assembly includes means to absorb impact loads through plastic deformation as the column tubes move together axially during a collision, and a pair of relatively non-deformable platelike sliding members axially oriented, secured to the steering column support member and positioned between the separable coupling and the column support member, over which a portion of the separable support or coupling member may slide as the upper column tube collapses. However, in this invention, different parts are responsible for absorbing energy plastically or elastically, forming an assembly with many mounting elements.

### DESCRIPTION OF THE INVENTION

This invention refers to a joining element that provides fastening between two vehicle parts and control in the event of an impact.

The joining element comprises:
- a first joining area, intended to connect the joining element to a first vehicle part via a first fastening element; and
- a second joining area, located at the opposite end of the joining element relative to the first joining area, intended to connect the joining element to a second vehicle part via a second fastening element.

The joining element is intended to provide rigidity in the connection between the first and second vehicle parts. This rigidity increases resistance to applied forces on the assembly, particularly along a specific direction.

Unlike known joining elements in the prior art, the joining element of this invention additionally comprises:
- a fuse area located between the first and second joining areas, designed to break in a controlled way when a compressive force exceeding a default value is applied; and
- a deformable area located between the first and second joining areas, designed to undergo deformation after the fuse area breaks, controlling the relative movement between the first and second joining areas.

The inclusion of these two areas allows control over the absorption of energy received in an impact. For impacts exceeding a predetermined force, the fuse area breaks, allowing relative movement between the first and second parts. During this movement, energy is absorbed in the deformation of surrounding parts, limiting the severity of impact on pedestrians. The deformable area controls the relative movement between the first and second joining areas, and thus between the first and second parts. This allows control over the direction and extent of the movement.

The joining areas and the deformable area are distinct areas within the joining element. When the fuse area breaks, the joining element is not divided into two parts; the first and second joining areas remain connected, at least via the deformable area.

Furthermore, the joining element is formed as a single component, which may be made of plastic material. This eases manufacturing and assembly of the joining element relative to the first and second parts. A single component or single-piece includes the first joining area, the second joining area, the deformable area, and the fuse area, with said single component being obtained by means of a single production process, preferably plastic injection.

Preferably, the joining element has a step-shaped geometry, wherein the first and second joining areas are located at opposite ends of said step-shaped geometry and the deformable area is arranged on an edge of the step-shaped geometry.

The step-shaped geometry is especially beneficial for controlling deformation between two areas, as the first and second areas are separated by an approximately 90-degree angle. When a compressive force is applied between the ends of this step-shaped geometry, both areas tend to approach one another, pivoting around the edge of said step-shaped geometry. Positioning the deformable area on the edge allows control of the direction and degree of deformation of both areas, both the first and the second.

Preferably, the deformable area has a rounded cross-section connecting the surfaces of the step-shaped geometry. This geometry ensures that deformation occurs only in the deformable area, as well as limiting the direction in which this deformation occurs.

Preferably, the joining element comprises at least one side surface covering one side of the step-shaped geometry, with the fuse area located on at least one of these side surfaces. By "side surface" is meant a surface that connects at least the two main or front surfaces of the step-shaped geometry, that is, it connects the substantially perpendicular surfaces of the step-shaped geometry. Thus, the fuse area is not arranged on any of the main or front surfaces of the step-shaped geometry, but on at least one of the side surfaces. So, when the fuse area breaks, the main or front surfaces of the step-shaped geometry remain intact, keeping the first and second joining areas connected, in particular, at least via the deformable area.

Advantageously, since the fuse area is arranged on at least one of the side surface, when said fuse area breaks due to the application of a compressive force greater than a default value, the first and second joining areas approach each other, pivoting around the deformable area.

Preferably, the fuse area is located along the bisector of the angle formed by the surfaces of the first and second joining areas in contact with the side surface.

Preferably, the side surface comprises two parallel and misaligned surfaces, with the fuse area mechanically connecting both of them. The manufacturing and formation of the fuse area in the joining element is thereby simplified.

Furthermore, the end of each parallel surface adjacent to the fuse area is set up to, after the fuse area breaks, contact the pertinent opposite surface of the first and second joining parts.

In this way, the relative movement of the first and second parts is limited, as an interference is created between each of the parallel surfaces with the first and second joining parts. The maximum movement is limited, thus enabling control of the deformation of the surroundings, and in particular, the behavior of the first part and the second part in the event of an accident or impact.

In fact, the fuse area preferably comprises a weakening area, which is the area wherein the fastening element is intended to break. This weakening area may be obtained either by a thickness smaller than the thickness of the fastening element, or it may include at least one hole. Both embodiments may be compatible with each other, creating the weakening area with both a reduced thickness and at least one hole.

Moreover, both the first and the second joining areas may comprise at least one reinforcing rib. In this way, the joining areas are reinforced, and deformation and breaking occur through the deformation and fuse areas, respectively.

### DESCRIPTION OF THE DRAWINGS

According to a preferred practical embodiment of the invention, a set of drawings is included as part of this description to complement the description provided and to aid in a better understanding of the characteristics thereof, in which for illustrative and non-limiting purposes, the following has been represented:
Figure 1. It shows a perspective view of the joining element of the invention in the working position, fixed by the pertinent fastening elements to respective parts of a vehicle.
Figure 2. It shows a top perspective view of the joining element of the invention.
Figure 3. It shows a bottom perspective view of the joining element of the invention.
Figure 4. It shows a sectional perspective view of the part in the position shown in Figure 1.

Below is a list of the different elements represented in the figures with their associated numerical references:
1. First joining area.
2. Second joining area.
3. Deformable area.
4. Fuse area.
5. Parallel surfaces.
6. First fastening area.
7. Second fastening area.
8. First fastening hole.
9. Second fastening hole.
10. First reinforcement.
11. Second reinforcement.

### PREFERRED EMBODIMENT OF THE INVENTION

Below there is a description of a preferred embodiment of the joining element for impact control, with the aid of the figures, according to this invention.

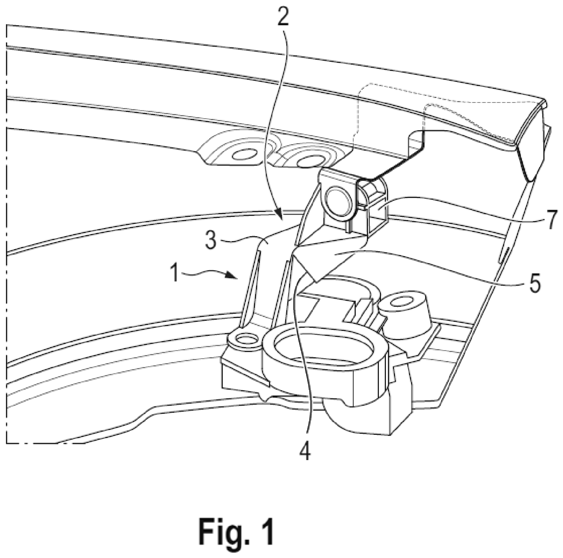

Figure 1 represents the joining element in the working position, connecting two parts of a vehicle. Specifically, the first joining area (1) is fixed to the vehicle structure, being a component of high rigidity and strength. On the other hand, the second joining area (2) is fixed to the fender. Both fastening areas are by means of bolted connections.

The function of the joining element, in its working position, is to provide rigidity to the fender, especially in the cross-section direction of the vehicle. Thus, in the event of a force such as a person leaning against the side of the vehicle, applying their weight to the fender in the cross-section direction, the joining element ensures that the fender does not yield, transferring these forces to the vehicle structure. The joining element is oriented to fulfill this function, so that the deformable area (3) is substantially perpendicular to this cross-section direction of the vehicle.

Conversely, the joining element is set up to allow relative movement between the fender and the vehicle structure when an impact occurs in the vertical direction. Thus, when, for example, a pedestrian impacts the upper surface of the fender, particularly the pedestrian's head, it is important that, in order to reduce head injuries, energy absorption occurs and direct impact against hard components is avoided. Therefore, the joining element may not behave as an immovable and non-deformable component in the event of a head impact. The joining element is set up to break at its fuse area (4) and deform at the deformable area (3). The combination of these two components of the joining element allows, on the one hand, the fender to move downward, not behaving as a rigid element, and deforming to absorb the impact energy, while at the same time, the relative movement between the fender and the vehicle structure is controlled, both in direction and length. The particular features of the joining element are explained in greater detail below.

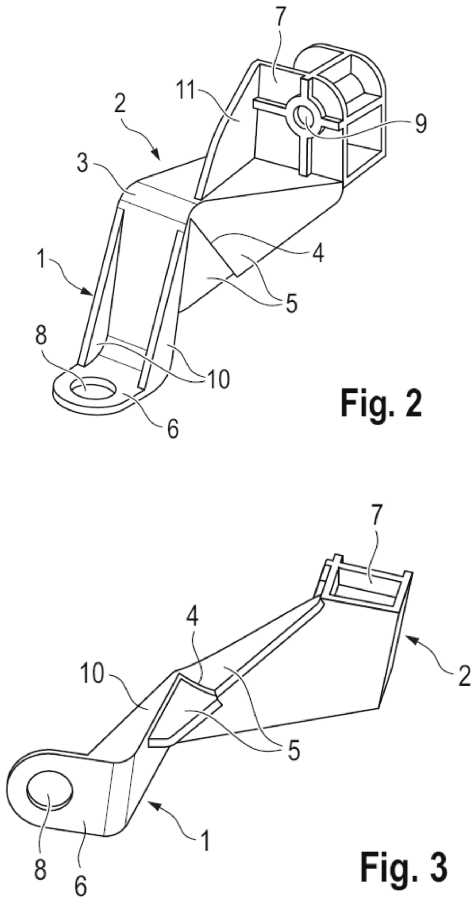

In Figure 2, it may be noted that the joining element is formed by a first joining area (1) and a second joining area (2), creating a step-shaped geometry, which respectively comprise a pair of first reinforcements (10) and a first fastening area (6) with a first fastening hole (8), on the one hand, and a second reinforcement (11) and a second fastening area (7) with a second fastening hole (9), on the other hand.

The first joining area (1) comprises an "L"-shaped geometry, such that the first fastening area (6) is arranged in a substantially horizontal plane. Other orientations and geometries are equally valid. Thus, one wall of the "L"-shaped first joining area (1) is arranged adjacent to the deformable area (3) of the joining element. The other wall comprises the first fastening area (6), which in turn includes the first fastening hole (8) to allow a mechanical linkage with the first part by means of a bolted connection. The first reinforcements (10) connect both walls of the "L"-shaped geometry of the first joining area (1).

The second joining area (2) comprises an "L"-shaped geometry, such that the second fastening area (7) is arranged in a substantially vertical plane. Other orientations and geometries are equally valid. Thus, one wall of the "L"-shaped second joining area (2) is arranged adjacent to the deformable area (3) of the joining element. The other wall comprises the second fastening area (7), which in turn includes the second fastening hole (9) to allow mechanical linkage with the second part by means of a bolted connection. The second reinforcement (11) connects both walls of the "L"-shaped geometry of the second joining area (2).

Reinforcements (10) and (11) are set up to increase the rigidity of the first joining area (1) and the second joining area (2), respectively. The aim is to ensure that these L-shaped geometries do not bend or deform when forces or loads are applied, ensuring that, in the event of deformation, this occurs in the deformable area (3).

Figure 3 represents a view of the joining element shown in Figure 2 from a bottom perspective.

The first joining area (1) and the second joining area (2) are connected by the concave or side area through a side surface, formed by two parallel surfaces (5) misaligned and joined by a rib. The rib, as the joining area of the two parallel surfaces (5), belongs to the fuse area (4) and is the area that will tend to break when compressive forces are applied to the joining element. In the figures, it may be noted that the fuse area (4) is located on the bisector of the angle formed by the joining areas (1, 2) with the pertinent parallel surface (5).

The deformable area (3), in turn, connects the first and second joining areas (1, 2), forming an edge between them.

When the joining element receives an impact of a certain level, the fuse area (4) will break at the rib in this set-up. The two parallel surfaces (5) will tend to overlap, while the deformable area (3) flexes, so that the joining areas (1, 2) tend to move closer together. This movement is limited by the surfaces of the joining areas (1, 2), which will limit the movement of the parallel surfaces (5) by intercepting them.

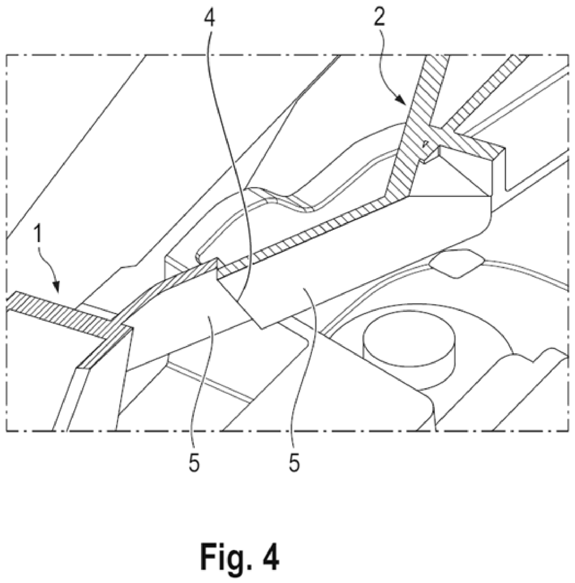

Figure 4 represents the joining element of Figure 3, sectioned to show the cross-section of the joining element. In this figure, it may be clearly noted how the fuse area (4) comprises a minimum thickness area in the joining element, set up to cause the joining element to break preferentially at this area, in the event of a given compressive force. This minimum thickness area creates the rib located at the ends of the two parallel surfaces (5), resulting in the area of minimum resistance to compressive forces of the joining element, causing its breaking.

## Claims

1. A joining element between two parts of a vehicle, comprising:
- a first joining area (1) intended to connect the joining element to a first part by means of a first fastening element; and
- a second joining area (2) located at the opposite end of the joining element relative to the first joining area (1), intended to connect the joining element to a second part by means of a second fastening element,
the joining element being **characterized in that** it comprises:
- a fuse area (4) located between the first joining area (1) and the second joining area (2), designed to break in a controlled way when a compressive force exceeding a default value is applied; and
- a deformable area (3) located between the first joining area (1) and the second joining area (2), designed to undergo deformation after the fuse area (4) breaks, controlling the relative movement between the first joining area (1) and the second joining area (2),
wherein the joining element is formed as a single component.

2. The joining element of Claim 1, wherein the joining element comprises a step-shaped geometry, the first joining area (1) and the second joining area (2) being at opposite ends of said step-shaped geometry, wherein the deformable area (3) is arranged on an edge of said step-shaped geometry.

3. The joining element of Claim 1, wherein the deformable area (3) comprises a rounded cross-section, which connects the surfaces of the step-shaped geometry of the joining element.

4. The joining element according to any of Claims 2 or 3, wherein the joining element comprises at least one side surface arranged to cover one side of the step-shaped geometry, the fuse area (4) being located on at least one of said side surfaces.

5. The joining element according to Claim 4, wherein the fuse area (4) is located on the bisector of said side surface.

6. The joining element according to any of Claims 4 or 5, wherein the side surface comprises two parallel surfaces misaligned with each other, the fuse area (4) being mechanically linked to the two parallel surfaces.

7. The joining element according to Claim 6, wherein the end of each parallel surface adjacent to the fuse area (4) is set up to, after the fuse area (4) breaks, contact the pertinent opposite surface of the step-shaped geometry of the joining element.

8. The joining element according to any of the preceding claims, wherein the fuse area (4) comprises a weakening area.

9. The joining element according to Claim 8, wherein the weakening area comprises a thickness smaller than the thickness of the joining element.

10. The joining element according to any of Claims 8 or 9, wherein the weakening area comprises at least one hole.

11. The joining element according to any of the preceding claims, wherein the first joining area (1) comprises at least one reinforcing rib (10).

12. The joining element according to any of the preceding claims, wherein the second joining area (2) comprises at least a second reinforcing rib (11).

13. The joining element according to any of the preceding claims, wherein the joining element is made of plastic material.
